# EUROPÄISCHE PATENTSCHRIFT

(11) **EP 1 084 332 B1**
(45) Veröffentlichungstag und Bekanntmachung des Hinweises auf die Patenterteilung: **12.03.2003**
(21) Anmeldenummer: 99919209.9
(22) Anmeldetag: 08.04.1999
(51) Int. Cl.: F01N 3/08

(54) **VERFAHREN ZUM BETREIBEN EINER BRENNKRAFTMASCHINE**
METHOD FOR OPERATING AN INTERNAL COMBUSTION ENGINE
PROCEDE POUR ACTIONNER UN MOTEUR A COMBUSTION INTERNE

(30) Priorität: 11.04.1998 DE 19816276
(43) Veröffentlichungstag der Anmeldung: 21.03.2001
(73) Patentinhaber: AUDI AG, 85045 Ingolstadt (DE)
(72) Erfinder: PFALZGRAF, Bernhard, D-85051 Ingolstadt (DE)
(86) Internationale Anmeldenummer: EP9902362
(87) Internationale Veröffentlichungsnummer: WO99053176

(56) Entgegenhaltungen:
- EP-A- 0 580 389
- EP-A- 0 636 770
- EP-A- 0 869 263
- WO-A-98/07497
- WO-A-98/27322

## Beschreibung

Die Erfindung betrifft ein Verfahren zum Betreiben einer Brennkraftmaschine gemäß dem Oberbegriff des Anspruchs 1 sowie eine Vorrichtung zur Durchführung des Verfahrens.

Bei Brennkraftmaschinen, insbesondere magerbetriebenen Ottomotoren, ist zur Einhaltung der Abgasvorschriften eine Reduzierung des Stickoxydanteils (NOx) notwendig. Hierfür werden entweder NOx-Speicherkatalysatoren oder DeNOx-Katalysatoren in der Abgasanlage eingesetzt. NOx-Speicherkatalysatoren speichern das im Abgas vorhandene NOx und geben es unter gewissen Betriebsbedingungen (λ < 1) wieder frei. Die Desorption des NOx von der Oberfläche des NOx-Speicherkatalysators ist in gewissen Abständen notwendig, da die Speicherfähigkeit von NOx-Speicherkatalysatoren nur begrenzt ist. Um während der NOx-Regeneration die Abgasgrenzwerte einzuhalten, werden in einem nachgeschalteten Katalysatorteil das freiwerdende NOx reduziert und die nicht vollständig umgesetzten Reduktionsmittel HC und CO oxidiert. Eine solche Vorrichtung ist aus der EP 560991 bekannt. Nachteilig bei den bisher bekannten NOx-Speicherkatalysatoren ist, daß deren NOx-Speicherfähigkeit im Laufe der Zeit aufgrund von Schwefeleinlagerungen, hauptsächlich in der Form von Sulfat, immer mehr abnimmt und dadurch die Funktionsfähigkeit der gesamten Abgasanlage erheblich beeinträchtigt wird. Abgasgrenzwerte sind mit "schwefelvergifteten" NOx-Speicherkatalysatoren nicht einzuhalten. Verursacht werden die Schwefeleinlagerungen aufgrund des Schwefelanteils im Kraftstoff.

Es ist bekannt, daß eine Desorption des Schwefels von der Oberfläche des NOx-Speicherkatalysators unter gewissen Bedingungen prinzipiell möglich ist. Dieser Vorgang wird im folgenden als Entschwefelung bezeichnet. Eine Voraussetzung hierfür ist, daß der NOx-Speicherkatalysator eine gewisse Mindesttemperatur aufweist und gleichzeitig eine reduzierende Umgebung (ausreichend HC und CO) gegeben ist.

Diese Bedingungen sind aber nur bei längerem Betrieb der Brennkraftmaschine bei Vollast (bzw. hoher Teillast) gegeben. Ein solcher Betriebszustand ist fahrzeug- bzw. fahrerabhängig und damit sehr zufällig. Er hängt von einer Vielzahl von Bedingungen wie Fahrerwunsch, Verkehrs- und Straßenverhältnissen etc. ab.

Neben dem Zeitpunkt ist natürlich auch die Dauer dieser Betriebsweise und damit der Zeitraum der für die Entschwefelung zur Verfügung steht zufällig. Eine Entschwefelung eines NOx-Speicherkatalysators aufgrund eines Vollast- bzw. hohen Teillastbetriebs ist somit weder bei jedem Fahrzeug noch in der notwendigen Regelmäßigkeit gegeben.

Es ist somit nicht auszuschließen, daß die Funktionsfähigkeit eines NOx-Speicherkatalysator aufgrund der Schwefeleinlagerungen stark beeinträchtigt wird und deshalb der NOx-Anteil im Abgas stark ansteigt.

Diese oben beschriebene Art der Entschwefelung eines NOx-Speicherkatalysators hat eine Vielzahl von Nachteilen. Sie erfolgt äußerst unregelmäßig und ist nur unter ganz speziellen Betriebsbedingungen (Vollast bzw. hohe Teillast) bei erhöhtem Treibstoffverbrauch möglich. Der Zustand des NOx-Speicherkatalysators wird zwar während des Betriebs überwacht, es ist jedoch keine Zuordnung dahingehend möglich, wovon erhöhte NOx-Emissionen herrühren. Außerdem ist eine Aufforderung für den Fahrer zu einer Vollastfahrt zwar prinzipiell denkbar, aber nur selten ausführbar.

Aus der DE 197 47 222 (C1) ist eine Verbrennungsmotoranlage sowie ein Verfahren zum Betrieb einer solchen Verbrennungsmotoranlage bekannt, in welcher periodisch Stickoxyde adsorbiert und desorbiert werden. Zur Rückführung der Katalysatortemperatur kann während der Desulfatisierung Sekundärluft in den NOx-Speicherkatalysator eingeblasen werden und zur Bereitstellung von ausreichenden Reduktionsmitteln im Abgas ein fettes Motorluftverhältnis eingestellt werden. Dabei sind die Sekundärluft, die Sekundärluftrate und das Motorluftverhältnis in Abhängigkeit von den Informationen eines Temperatursensors bzw. einer Lambda-Sonde einstellbar, um zum Beispiel einen vorgebbaren Temperatursollwert und/oder ein vorgebbares Katalysatorluftverhältnis einzuregeln.

Aufgabe der vorliegenden Erfindung ist es, ein Verfahren zum Betreiben einer Brennkraftmaschine zu schaffen, das die oben genannten Nachteile nicht aufweist, mit dem eine Entschwefelung eines NOx-Speicherkatalysators jederzeit möglich ist, das automatisch erfolgt ohne den Fahrzustand des Fahrzeugs zu beeinflussen, zu dessen Durchführung keine teuren Zusatzeinrichtungen notwendig sind und das einfach und kostengünstig durchführbar ist. Ferner ist es Aufgabe der vorliegenden Erfindung eine Vorrichtung zur Durchführung des Verfahrens bereitzustellen.

Gelöst wird diese Aufgabe durch die in den Ansprüchen 1 und 13 angegebenen Merkmale.

Die wesentliche Idee der Erfindung besteht darin, bei einer Anforderung einer Entschwefelung des NOx-Speicherkatalysators in einem ersten Zeitintervall T₁ ein Umschalten des Betriebs der Brennkraftmaschine auf einen Wert λ₁ < 1 durchzuführen und gleichzeitig Sekundärluft vor dem NOx-Speicherkatalysator einzublasen, um diesen aufzuheizen. In einem anschließenden zweiten Zeitintervall T₂ wird die Sekundärlufteinblasung vor dem NOx-Speicherkatalysator abgebrochen und die Brennkraftmaschine bei einem Wert λ₂< 1 betrieben. Während diesem zweiten Zeitintervall T₂ findet die eigentliche Desorption des Schwefels von der Oberfläche des NOx-Speicherkatalysators statt, da nun eine ausreichende reduzierende Umgebung gegeben ist.

Die Verfahrensschritte gemäß den Zeitintervallen T₁ und T₂ können mehrfach hintereinander durchlaufen werden. Nach der Beendigung der Entschwefelung wird der Normalbetrieb der Brennkraftmaschine wieder aufgenommen.

Der wesentliche Vorteil des erfindungsgemäßen Verfahrens besteht darin, daß eine Entschwefelung automatisch durchgeführt wird, daß die notwendigen Maßnahmen in einem weiten Betriebsbereich der Brennkraftmaschine durchführbar sind und gleichzeitig keine merklichen Auswirkungen auf das Betriebsverhalten der Brennkraftmaschine hat. Der Fahrer wird den Vorgang einer Entschwefelung nicht bemerken.

Vorteilhafte Weiterentwicklungen der Erfindung sind in den Unteransprüchen angegeben.

Nachfolgend ist die Erfindung anhand eines in der Zeichnung dargestellten Ausführungsbeispiels näher erläutert. Es zeigen:
- **Fig. 1**: schematische Darstellung einer Brennkraftmaschine mit zwei Dreiwegekatalysatoren und einem dazwischen angeordneten NOx-Speicherkatalysator,
- **Fig. 2**: Brennkraftmaschine gemäß Fig. 1 mit gekühlten Verbindungsleitungen, und
- **Fig. 3**: Brennkraftmaschine gemäß Fig. 1 mit einer Umgehungsleitung.

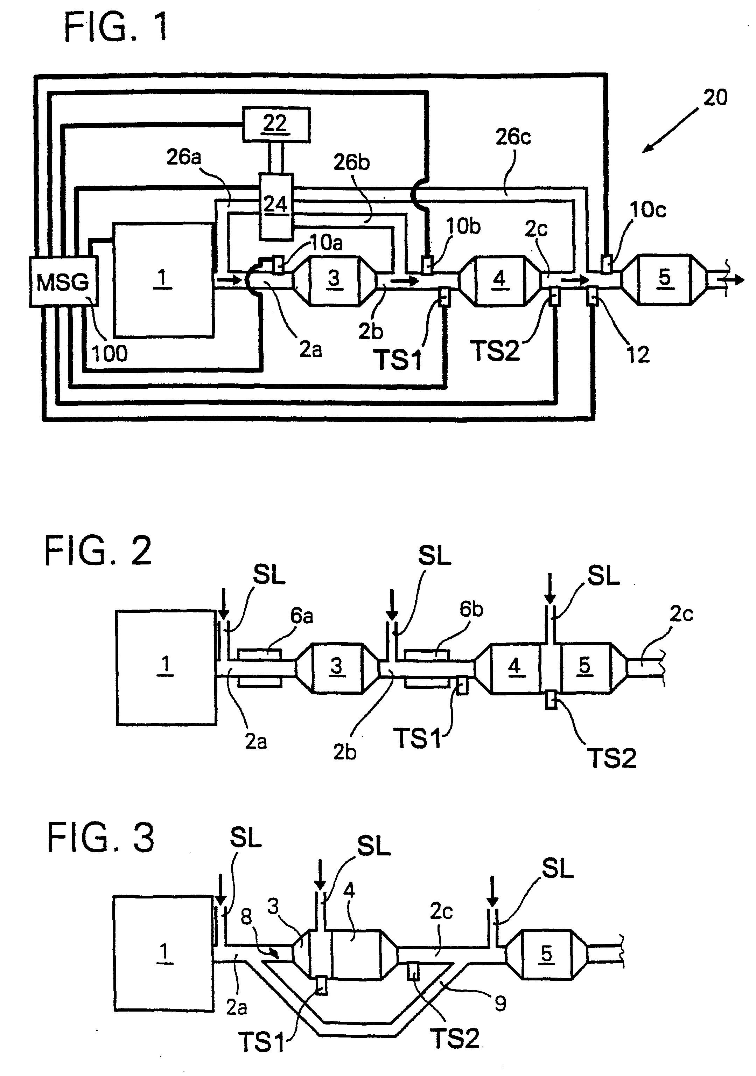

In Fig. 1 ist eine Brennkraftmaschine mit einem Motor 1 und einer Abgasanlage 20 schematisch dargestellt. Die Abgasanlage 20 besteht aus zwei Dreiwegekatalysatoren 3 und 5 zwischen denen ein NOx-Speicherkatalysator 4 angeordnet ist.
Der Dreiwegekatalysator 3, der als Startkatalysator dient, ist über einen Krümmer 2a direkt mit dem Motor 1 verbunden. Vor dem Dreiwegekatalysator 3 ist ein stetiger Sauerstoffsensor 10a angeordnet. Der Dreiwegekatalysator 3 kann alternativ mit oder ohne O₂-Speicher ausgeführt sein. Er übernimmt die gesamte Konvertierung der Schadstoffe bis der NOx-Speicherkatalysator 4 seine Betriebstemperatur erreicht hat. In der Startphase wird der Motor 1 vorzugsweise mit λ =1 oder ggf. zeitweise mit λ < 1 bis zum Anspringen des Dreiwegekatalysators 3 betrieben.

Der Dreiwegekatalysator 3 ist über ein Vorrohr 2b mit dem NOx-Speicherkatalysator 4 verbunden. Im Vorrohr 2b sind jeweils ein Temperatursensor TS1 und ein stetiger Sauerstoffsensor 10b angeordnet. Der NOx-Speicherkatalysator 4 ist über ein Vorrohr 2c mit dem Dreiwegekatalysator 5 verbunden. Im Vorrohr 2c ist ein weiterer Temperatursensor TS2, ein herkömmlicher Sauerstoffsensor 10c oder alternativ ein NOx-Sensor 12 angeordnet.

In einem in der Zeichnung nicht dargestellten vereinfachten Ausführungsbeispiel wird auf den Dreiwegekatalysator 3 verzichtet.
Eine nicht näher dargestellte Sekundärluftpumpe 22 mit Verbindungsleitungen 26a, 26b, 26c dient zum Einblasen von Sekundärluft in die Abgasanlage 20. Mit Hilfe eines ansteuerbaren Ventils 24 läßt sich der Einblasort dahingehend steuern, ob die Sekundärluft vor bzw. nach dem Dreiwegekatalysator 3 oder nach dem NOx-Speicherkatalysator 4 in die Abgasanlage 20 eingeblasen wird. Zusätzlich läßt sich die Sekundärluftmasse über das Ventil steuern bzw. regeln.

Bei der Sekundärluftpumpe 22 kann es sich um ein elektrisches Gebläse, einen mechanischen Kompressor oder um einen Turbolader handeln. Denkbar ist auch eine Luftförderung eines oder mehrerer Zylinder durch Abschaltung der Kraftstoffzufuhr.

Die Sekundärluftmasse läßt sich mit einem nicht dargestellten Luftmassenmesser z.B. dem Luftmassenmesser für die Motorluftmasse oder einem separaten Luftmassenmesser bestimmen.

Die Sekundärluftmasse läßt sich beispielsweise mit Hilfe des Ventils 24 oder durch getaktete Ansteuerung der Sekundärluftpumpe 22 regeln.

Die Fließrichtung des Abgasstroms ist durch Pfeile gekennzeichnet.

In den Fig. 2 und 3 sind der Übersichtlichkeit halber vom Sekundärluftsystem nur die Sekundärlufteinlässe SL angedeutet und die Lage der Temperatursensoren angegeben.
Die in Fig. 2 dargestellte Brennkraftmaschine weist im Unterschied zu der in Fig. 1 dargestellten Brennkraftmaschine jeweils eine Wasserkühlung 6a bzw. 6b am Krümmer 2a bzw. an der Verbindung 2b zwischen Dreiwegekatalysator 3 und NOx-Speicherkatalysator 4 auf.

Die Wasserkühlung dient teilweise als Schutz vor thermischer Zerstörung des NOx-Speicherkatalysators 4 in höheren Lastbereichen, da die bekannten Speichermaterialien bei max ca. 800° C eine starke thermische Alterung zeigen.
Außerdem kann mit der Wasserkühlrung der Arbeitsbereich des NOx-Speicherkatalysators 4 erweitert werden. Eine effektive NOx-Speicherung findet nur in einem bestimmten Temperaturintervall (ca. 200 bis 450° C) statt. Diese maximale Temperatur wird aber im Magerbetrieb bereits bei einer Fahrzeugeschwindigkeit von ca. 70 km/h erreicht. Durch Kühlung der Abgase ist auch bei höheren Geschwindigkeiten noch eine NOx-Speicherung möglich.
Die entsprechenden Kühlvorrichtungen einschließlich der zugehörigen Steuereinheit sind nicht näher dargestellt.
In einem in der Zeichnung nicht dargestellten Ausführungsbeispiel ist nur der Krümmer 2a mit einer Wasserkühlung 6a versehen.
Aus Platzgründen sind der NOx-Speicherkatalysator 4 und der Dreiwegekatalysator 5 in einem Gehäuse zusammengefaßt.

Die in Fig. 3 dargestellte Brennkraftmaschine weist eine Umgehungsleitung 9 mit einem Verbindungsstück 9a auf, mit der der erste Dreiwegekatalysator 3 bzw. der NOx-Speicherkatalysator 4 überbrückt werden. Damit kann der NOx-Speicherkatalysators 4 vor Überhitzung geschützt werden. Zur Steuerung des Abgasstromes dient eine Bypass-Klappe 8.

Der Dreiwegekatalysator 3 und der NOx-Speicherkatalysator 4 sind in diesem Ausführungsbeispiel in einem Gehäuse angeordnet.

Der Dreiwegekatalysator 3 bzw. 5 kann auch als Konuskatalysator aus Metall ausgebildet sein und in einem gemeinsamen Gehäuse mit dem NOx-Speicherkatalysator 4 angeordnet werden (in der Zeichnung nicht dargestellt).

Alle Sensoren sowie alle Steuereinrichtungen sind mit einem nicht näher dargestellten Motorsteuergerät 100 verbunden. In diesem Motorsteuergerät 100 werden die Sensorsignale verarbeitet und die entsprechenden Steuerbefehle an die Steuereinrichtungen gegeben.

Nachfolgend ist die Funktionsweise der Erfindung näher erläutert.

Im Laufe des Betriebs der Brennkraftmaschine nimmt die Funktionsfähigkeit des NOx-Speicherkatalysators 4 langsam aufgrund von Schwefeleinlagerungen ab. Die Funktionsfähigkeit des NOx-Speicherkatalysator 4 wird deshalb wie nachfolgend beschrieben überwacht.
Die NOx-Abgabe des Motors 1 ist kennfeldabhängig und läßt sich mit Hilfe des Motorsteuergeräts 100 ermitteln. Die aktuelle NOx-Sollspeicherfähigkeit des NOx-Speicherkatalysators 4 läßt sich ebenfalls aus im Motorsteuergerät 100 abgespeicherten Daten bestimmen.
Weichen die Meßwerte des NOx-Sensors 12 von den Sollwerten ab, so wird vom Motorsteuergerät 100 eine Entschwefelung des NOx-Speicherkatalysators 4 angefordert ( Verfahrensschritt a ).

Alternativ kann die Funktionsfähigkeit des NOx-Speicherkatalysators 4 mit Hilfe der zwei Sauerstoffsensoren 10b und 10c überwacht werden. Der Sauerstoffsensor 10c nach NOx-Speicherkatalysator 4 zeigt die O₂-Konzentrationen auch während der NOx-Regenerierung exakt an. Der O₂-Konzentrationsverlauf ändert sich bei der NOx-Regenerierung in Abhängigkeit der thermischen Alterung und dem Grad der Schwefelvergiftung. Bei beiden Zuständen kommt es zu früheren "Durchbrüchen" der Reduktionsmittel HC und CO und schnelleren Änderungen der O₂-Konzentrationsverläufen während der NOx-Regenerierung.
Aufgrund dieser Informationen ist ebenfalls eine Anforderung einer Entschwefelung durch das Motorsteuergerät möglich.

Die Entschwefelung wird durch eine Umschaltung des Betriebs der Brennkraftmaschine auf λ₁ < 1 (vorzugsweise λ << 1 z. B. 0,7-0,9) bei gleichzeitiger Einblasung von Sekundärluft vor dem NOx-Speicherkatalysator 4 während eines ersten Zeitintervalls T₁ eingeleitet ( Verfahrensschritt b und c). Dazu wird die Sekundärluftpumpe 22 und das Ventil 24 entsprechend angesteuert. Durch diese Maßnahme findet eine Aufheizung (exotherme Reaktion) des Abgasstromes nach dem Dreiwegekatalysator 3 statt. Die so zusätzlich erwärmten Abgase dienen zum Heizen des NOx-Speicherkatalysators 4.

Während des ersten Zeitintervalls T₁ (Verfahrensschritt c) ist darauf zu achten, daß die Temperatur des NOx-Speicherkatalysator 4 sich in gewissen Grenzen bewegt. Einerseits sollten 800 C nicht überschritten werden, anderseits sollte die Mindestentschwefelungstemperatur ca. 600 C aber deutlich überschritten werden.
Während des ersten Zeitintervalls T₁ erfolgt die Motorsteuerung so, daß der Temperaturwert (TS1) d.h. die Abgastemperatur vor dem NOx-Speicherkatalysator 4 im Bereich 750 C - 800 C liegt. Wird der Grenzwert von 800 C erreicht, so wird der Wert λ₁ kurzfristig angehoben, der Zündwinkel verändert oder durch getaktete Ansteuerung die Sekundärluftmenge abgeregelt, um eine weitere Aufheizung zu vermeiden.
Die Abgastemperatur nach dem NOx-Speicherkatalysator 4 steigt während des Zeitintervalls T₁ ebenfalls an. Sie ist ein Maß für die Temperatur im Innem des NOx-Speicherkatalysator 4. Die Sekundärlufteinblasung wird abgebrochen, sobald der Temperaturwert des Temperatursensors TS2 die Mindestentschwefeiungstemperatur um einen Mindestwert (ca. 100 C) übersteigt.
Das erste Zeitintervall T₁ dauert also so lange, bis z.B. der Temperatursensor TS2 den Temperaturwert 700 C erreicht.

Durch den rechtzeitigen Abbruch der Sekundärlufteinblasung vor dem NOx-Speicherkatalysator 4 wird dieser vor Überhitzung geschützt.

Durch die Verwendung von zwei Temperatursensoren TS1 und TS2 kann die Abgastemperatur vor und nach dem NOx-Speicherkatalysator 4 kontrolliert werden. Durch Vergleich der beiden Temperaturwerte TS1 und TS2 läßt sich die Wärmeaufnahme und gleichzeitig die Temperatur des NOx-Speicherkatalysators 4 ermitteln. Durch ein Temperaturmodell kann alternativ bei Verwendung nur eines Temperatursensors vor dem NOx-Speicherkatalysator 4 diese ebenfalls ermittelt werden und damit der Aufheizungvorgang entsprechend kontrolliert werden.

Es ist sicher sinnvoll während der Sekundärlufteinblasung vor dem NOx-Speicherkatalysator 4 d.h. während des Zeitintervalls T₁ den Gesamtlambdawert der durch die Sekundärlufteinblasung vor bzw. in dem NOx-Speicherkatalysator 4 erzielt wird einzuregeln. Dieser Gesamtlambdawert sollte größer 1 sein und vorzugsweise im Intervall zwischen 1,05 und 1,2 liegen. Beeinflussen läßt sich dieser Gesamtlambdawert entweder über den Motorbetrieb bzw. über die Sekundärluftmasse selbst. Hierbei steuert das Motorsteuergerät 100 den Motorbetrieb in Abhängigkeit der Sekundärluftmasse so, daß dieser Gesamtlambdawert erzielt wird oder die Sekundärluftmasse wird in Abhängigkeit des Motorbetriebs so geregelt, daß ebenfalls dieser Gesamtlambdawert erzielt wird.
Die Sekundärluftmasse läßt sich über die Steuerung des Ventils 24 bzw. die getaktete Ansteuerung der Sekundärluftpumpe 22 regeln.
Überwacht wird der Gesamtlambdawert mit Hilfe des stetigen Sauerstoffsensors 10b, der nach der Einblasstelle der Sekundärluft angeordnet ist.

Die Sekundärlufteinblasung während des Zeitintervall T₁ führt zu einer Sauerstoffanreicherung (λ > 1) in der Abgasanlage 20 stromabwärts der Einblasstelle. In einer sauerstoffreichen Atmosphäre ist jedoch eine Entschwefelung nicht möglich. Deshalb wird in einem zweiten Zeitintervall T₂ die Einblasung von Sekundärluft vor dem NOx-Speicherkatalysator 4 eingestellt, wobei die Brennkraftmaschine weiterhin bei λ₂ < 1 (vorzugsweise 0,9 < λ₁ < 0,99) betrieben wird (Verfahrenschritt d und e). Dies führt zu einer reduzierenden Atmosphäre im NOx-Speicherkatalysator 4, die die Entschwefelung ermöglicht. Da eine Sekundarlufteinblasung während des Zeitintervalls T₂ nicht erfolgt, sinkt die Temperatur des NOx-Speicherkatalysators 4 ab, bis eine Desorption des Schwefels aus Temperaturgründen nicht mehr möglich ist. Sinkt der Temperaturwert des Temperatursensors TS2 unter die Mindestentschwefelungstemperatur so wird der Verfahrensschritt e abgebrochen und das Zeitintervall T₂ damit beendet.

Bei einer Anforderung einer Entschwefelung ist eine "definierte" Schwefelvergiftung vorhanden. Der Abbau dieser definierten Schwefeleinlagerungen erfordert eine bestimmte Zeitspanne, abhängig von der Temperatur des NOx-Speicherkatalysators 4 und dem Luftverhältnis λ des Abgases vor bzw. im NOx-Speicherkatalysator 4. Letzteres entspricht dem Angebot an Reduktionsmittel (HC und CO). Beides ist bekannt bzw. wird fortlaufend gemessen. Damit läßt sich im Motorsteuergerät 100 z. B. eine Mindestzeit für die Entschwefelung als Funktion von Abgastemperatur vor dem NOx-Speicherkatalysator 4 und dem λ-Wert vor NOx-Speicherkatalysator 4 festlegen.

Falls die Mindestzeit für die Entschwefelung nach einmaligem Durchlaufen der Verfahrensschritte b bis e nicht erreicht wurden, können nach dem Verfahrensschritt e die Verfahrensschritte b bis e nochmals (ein oder mehrfach) durchlaufen werden, bis der Normalbetrieb der Brennkraftmaschine wieder aufgenommen wird (Verfahrensschritt f).
Das Umschalten auf λ₁ , λ₂ bzw. Normalbetrieb wird vom Motorsteuergerät 100 so ausgeführt, daß keinerlei Momentensprünge oder sonstige Änderungen im Fahrverhalten, die vom Fahrer wahrnehmbar wären, auftreten.

In einem weiteren Ausführungsbeispiel erfolgt während des zweiten Zeitintervalls T₂ (λ₂ < 1) zur Abgasverbesserung während der Desorption des Schwefels eine Sekundärlufteinblasung zwischen dem NOx-Speicherkatalysator 4 und einem nachgeschalteten Dreiwegekatalysator 5. Hierzu wird das Ventil 24 entsprechend angesteuert.

Nach Erreichen des Temperaturwertes von 700 C am Temperatursensor TS2 wird deshalb die Sekundärlufteinblasung nicht abgebrochen sondern durch Umschaltung des Ventils 24 nach dem NOx-Speicherkatalysator 4 und vor dem Dreiwegekatalysator 5 fortgesetzt. Dadurch kann der Motor bei λ <1 (vorzugsweise 0,9 < λ ≤ 0,99) betrieben werden und gleichzeitig vor dem Dreiwegekatalysator 5 ein λ = 1 realisiert werden. Vorteil hierbei ist eine effiziente Konvertierung der Schadstoffe HC und CO im Dreiwegekatalysator 5 aufgrund des Gesamtlambdawertes von λ = 1 bei gleichzeitigem fetten Betrieb des Motors zur Erzeugung der erforderlichen Reduktionsmitteln für die Entschwefelung des NOx-Speicherkatalysator 4. Die Regelung auf λ = 1 kann durch Taktung der Sekundärluft über ein Taktventil oder bei Messung der eingeblasenen Sekundärluft durch Regelung der Kraftstoffmenge mittels des Motorsteuergeräts erfolgen. Letzteres funktioniert nur bei einigermaßen konstanter Sekundärluftmasse und damit konstanten Betriebsbedingungen. Diese Vorgehensweise ist dafür aber schneller und für die Abgasemissions-Konvertierung effizienter.

Der wesentliche Vorteil des erfindungsgemäßen Verfahrens liegt darin, daß eine Entschwefelung des NOx-Speicherkatalysators 4 sehr einfach durchführbar ist.

Gegenstand der Erfindung ist auch eine Vorrichtung zur Durchführung des Verfahrens nach den Ansprüchen 1 bis 12.

## Patentansprüche

1. Verfahren zum Betreiben einer Brennkraftmaschine, die einen NOx-Speicherkatalysator aufweist, mit folgenden Verfahrensschritten:
a) Anfordern einer Entschwefelung des NOx-Speicherkatalysators (4);
b) Durchlaufen eines ersten Zeitintervalls T₁, während dessen die Brennkraftmaschine bei λ₁ < 1 betrieben wird und gleichzeitig Sekundärluft vor dem NOx-Speicherkatalysator (4) eingeblasen wird;
c) Durchlaufen eines sich an den ersten Zeitintervall T₁ anschließenden zweiten Zeitintervalls T₂, während dessen die Brennkraftmaschine bei λ₂ < 1 betrieben wird, und die Sekundärlufteinblasung abgeschaltet wird, wobei λ₂ größer ist als λ₁; und
d) Wiederaufnehmen des Normalbetriebs der Brennkraftmaschine.

2. Verfahren nach Anspruch 1, wobei nach dem Verfahrensschritt c) die Verfahrensschritte b) und c) nochmals durchlaufen werden.

3. Verfahren nach einem der vorhergehenden Ansprüche, wobei eine Abschaltung der Sekundärlufteinblasung vor dem NOx-Speicherkatalysator (4) erfolgt, sobald der Temperaturwert des Temperatursensors TS1 die Mindestentschwefelungstemperatur plus einem Mindestwert übersteigt.

4. Verfahren nach einem der vorhergehenden Ansprüche, bei dem der Betrieb der Brennkraftmaschine bei λ₂ < 1 während des zweiten Zeitintervalls T₂ abgebrochen wird, sobald der Temperaturwert des Temperatursensors TS2 unter die Mindestentschwefelungstemperatur sinkt.

5. Verfahren nach Anspruch 3 mit den Temperaturwerten: Mindestentschwefelungstemperatur = 600° C, Mindestwert = 100° C

6. Verfahren nach einem der vorhergehenden Ansprüche, wobei während des Verfahrensschrittes b) die Brennkraftmaschine so betrieben wird, daß der Temperaturwert des Temperatursensors TS1 einen Maximalwert nicht übersteigt.

7. Verfahren nach einem der vorgehenden Ansprüche, mit den Lambdawerten : λ₁ = 0,7 - 0,89; λ₂ = 0,9 - 0,99

8. Verfahren nach einem der vorhergehenden Ansprüche, wobei während des Verfahrensschrittes b) vor dem NOx-Speicherkatalysator (4) ein Gesamtlambdawert größer 1 vorzugsweise im Bereich 1,05 - 1,2 herrscht.

9. Verfahren nach einem der vorhergehenden Ansprüche, wobei der NOx-Speicherkatalysator (4) mit Hilfe eines NOx-Sensors (12) auf Schwefeleinlagerungen überwacht wird.

10. Verfahren nach Ansprüchen 1 bis 8, wobei der NOx-Speicherkatalysator (4) mit Hilfe eines stetigen Sauerstoffsensors (10b) und eines herkömmlichen Sauerstoffsensors (10c) die jeweils vor bzw. nach dem NOx-Speicherkatalysator (4) angeordnet sind auf Schwefelverunreinigungen überwacht wird.

11. Verfahren nach einem der vorhergehenden Ansprüche, wobei während des Verfahrensschrittes b) eine Sekundärlufteinblasung nach dem NOx-Speicherkatalysator (4) und vor einem nachgeschalteten Dreiwegekatalysator (5) erfolgt.

12. Verfahren nach Anspruch 11, wobei der Gesamtlambdawert vor dem Dreiwegekatalysator (5) λ = 1 beträgt.

13. Brennkraftmaschine mit einem Motor, mit einer Abgasanlage und mit einem NOx-Speicherkatalysator in der Abgasanlage,
- mit einer Sekundärluftpumpe (22) und einer Verbindungsleitung zum Einblasen von Sekundärluft in die Abgasanlage vor dem NOx-Speicherkatalysator (4),
- mit einem Motorsteuergerät zum Steuern des Motorbetriebs mit einer derartigen Steuerung zum Entschwefeln des NOx-Speicherkatalysators (4),
bei der nach Anfordern einer Entschwefelung des NOx-Speicherkatalysators (4) ein erstes Zeitintervall T₁ durchlaufen wird, während dessen die Brennkraftmaschine bei λ₁ < 1 betrieben wird und gleichzeitig Sekundärluft vor dem NOx-Speicherkatalysator (4) eingeblasen wird, bei der im Anschluss an den ersten Zeitintervall T₁ ein zweiter Zeitintervall T₂ durchlaufen wird, während dessen die Brennkraftmaschine bei λ₂ < 1 betrieben wird und die Sekundärlufteinblasung abgeschaltet wird, wobei λ₂ größer ist als λ₁, und bei der danach der Normalbetrieb der Brennkraftmaschine wieder aufgenommen wird.

## Claims

1. Method for operating an internal combustion engine featuring a nitric oxide accumulator-type catalytic converter, said method comprising the following steps:
a) request for desulphuration of the nitric oxide accumulator-type catalytic converter (4);
b) elapse of a first period T₁, during which the internal combustion engine is operated at λ₁ < 1 and secondary air is simultaneously blasted in ahead of the nitric oxide accumulator-type catalytic converter (4);
c) elapse of a second period T₂ consecutive upon the first period T₁, during which the internal combustion engine is operated at λ₂ < 1, and blasting-in of the secondary air is discontinued, λ₂ being greater than λ₁; and
d) resumption of normal operation of the internal combustion engine.

2. Method according to claim 1, **characterised in that** step c) is followed by repeating steps b) and c).

3. Method according to either of the preceding claims, **characterised in that** blasting-in of the secondary air ahead of the nitric oxide accumulator-type catalytic converter (4) is discontinued as soon as the temperature level of the temperature sensor TS1 exceeds the minimum desulphuration temperature plus a minimum value.

4. Method according to any of the preceding claims, **characterised in that** operation of the internal combustion engine is suspended at λ₂ during the second period T₂ as soon as the temperature level of the temperature sensor TS2 falls below the minimum desulphuration temperature.

5. Method according to claim 3, **characterised by** the following temperature levels: minimum desulphuration temperature = 600°C, minimum value = 100°C.

6. Method according to any of the preceding claims, **characterised in that** during step b) the internal combustion engine is operated in such a way that the temperature level of the temperature sensor TS1 does not exceed a maximum value.

7. Method according to any of the preceding claims, **characterised by** the following values for lambda: λ₁ = 0.7 - 0.89; λ₂ = 0.9 - 0.99.

8. Method according to any of the preceding claims, **characterised in that** during step b) there is an overall lambda value greater than 1, preferably within the range 1.05 - 1.2, ahead of the nitric oxide accumulator-type catalytic converter (4).

9. Method according to any of the preceding claims, **characterised in that** the nitric oxide accumulator-type catalytic converter (4) is monitored for sulphur intercalations with the help of a nitric oxide sensor (12).

10. Method according to any of claims 1 to 8, **characterised in that** the nitric oxide accumulator-type catalytic converter (4) is monitored for sulphur contaminants with the help of a continuous oxygen sensor (10b) and a conventional oxygen sensor (10c), which are arranged respectively before and after the nitric oxide accumulator-type catalytic converter (4).

11. Method according to any of the preceding claims, **characterised in that** during step b) secondary air is blasted in after the nitric oxide accumulator-type catalytic converter (4) and before a three-way catalytic converter (5) connected downstream thereof.

12. Method according to claim 11, **characterised in that** the overall lambda value ahead of the three-way catalytic converter (5) is λ = 1.

13. Internal combustion engine comprising an engine, an exhaust unit, and a nitric oxide accumulator-type catalytic converter in the exhaust unit,
- with a secondary air pump (22) and a connecting line for blasting secondary air into the exhaust unit ahead of the nitric oxide accumulator-type catalytic converter (4),
- with an engine controller for control of the engine's operation for desulphuration of the nitric oxide accumulator-type catalytic converter (4) such that
after requesting desulphuration of the nitric oxide accumulator-type catalytic converter (4), a first period T₁ elapses during which the internal combustion engine is operated at λ₁ < 1 and simultaneously secondary air is blasted in ahead of the nitric oxide accumulator-type catalytic converter (4), that following on from the first period T₁ a second period T₂ elapses during which the internal combustion engine is operated at λ₂ < 1 and blasting-in of the secondary air is discontinued, λ₂ being greater than λ₁, and that thereafter normal operation of the internal combustion engine is resumed.

## Revendications

1. Procédé de fonctionnement d'un moteur à combustion interne, présentant un catalyseur accumulateur de NOx, présentant les étapes de procédé ci-après :
a) demande d'une désulfuration du catalyseur accumulateur de NOx (4) ;
b) écoulement d'un premier intervalle de temps T₁ pendant lequel le moteur à combustion interne fonctionne à λ₁ < 1 et de l'air secondaire est simultanément insufflé en amont du catalyseur accumulateur de NOx (4) ;
c) écoulement d'un deuxième intervalle de temps T₂ faisant suite au premier intervalle de temps T₁, pendant lequel le moteur à combustion interne fonctionne à λ₂ < 1, et l'insufflation d'air secondaire étant cessée, sachant que λ₂ est supérieur à λ₁ ; et
d) reprise du fonctionnement normal du moteur à combustion interne.

2. Procédé selon la revendication 1, dans lequel, après l'étape de procédé c), on répète une fois de plus les étapes de procédé b) et c).

3. Procédé selon l'une des revendications précédentes, dans lequel une coupure de l'insufflation d'air secondaire en amont du catalyseur accumulateur de NOx (4) étant effectuée dès que la valeur de température du capteur de température TS1 dépasse la température minimale de désulfuration, plus une valeur minimale.

4. Procédé selon l'une des revendications précédentes, dans lequel le fonctionnement du moteur à combustion interne à λ₂ < 1 pendant le deuxième intervalle de temps T₂ est interrompu dès que la valeur de température obtenue par le capteur de température TS2 descend au-dessous de la température minimale de désulfuration.

5. Procédé selon la revendication 3, avec comme valeur de température : température minimale de désulfuration = 600°C, valeur minimale = 100°C.

6. Procédé selon l'une des revendications précédentes, dans lequel pendant l'étape de procédé b) le moteur à combustion interne fonctionne de manière que la valeur de température du capteur de température TS1 ne dépasse pas une valeur maximale.

7. Procédé selon l'une des revendications précédentes, avec les valeurs lambda : λ₁ = 0,7 - 0,89 ; λ₂ = 0,9 - 0,99.

8. Procédé selon l'une des revendications précédentes, dans lequel, pendant l'étape de procédé b), il règne en amont du catalyseur accumulateur de NOx (4) une valeur lambda globale supérieure à 1 de préférence dans la plage de 1,05 à 1,2.

9. Procédé selon l'une des revendications précédentes, dans lequel le catalyseur accumulateur de NOx (4) est surveillé à l'aide d'un capteur de NOx (12) pour détecter l'apparition de dépôt de soufre.

10. Procédé selon les revendications 1 à 8, dans lequel le catalyseur accumulateur de NOx (4) fait l'objet d'une surveillance concernant les impuretés provenant du soufre, à l'aide d'un capteur d'oxygène (10b) à fonctionnement permanent et d'un capteur d'oxygène (10c) classique qui sont disposés respectivement en amont ou en aval du catalyseur accumulateur de NOx (4).

11. Procédé selon l'une des revendications précédentes, dans lequel, pendant l'étape de procédé b), une insufflation d'air secondaire est effectuée en aval du catalyseur accumulateur de NOx (4) et en amont d'un catalyseur à trois voies (5) installé en aval.

12. Procédé selon la revendication 11, dans lequel la valeur lambda globale en amont du catalyseur à trois voies (5) étant λ = 1.

13. Moteur à combustion interne, avec un moteur, avec un système de gaz d'échappement et un catalyseur accumulateur de NOx dans le système des gaz d'échappement,
- avec une pompe à air secondaire (22) et une conduite de liaison pour insuffler de l'air secondaire dans le système de gaz d'échappement, en amont du catalyseur accumulateur de NOx (4),
- avec un appareil de commande de moteur pour commander le fonctionnement du moteur, avec une commande telle que l'on procède à une désulfuration du catalyseur accumulateur de NOx (4),
pour lequel, sur demande d'une désulfuration du catalyseur accumulateur de NOx (4), on passe par un premier intervalle de temps T₁ pendant lequel le moteur à combustion interne fonctionne à λ₁ < 1 et, simultanément, on insuffle de l'air secondaire en amont du catalyseur accumulateur de NOx (4), pour lequel, suite au premier intervalle de temps T₁, on passe par un deuxième intervalle de temps T₂ pendant lequel le moteur à combustion interne fonctionne à λ₂ < 1 et l'insufflation d'air secondaire est cessée, sachant que λ₂ est supérieur à λ₁ et pour lequel ensuite le fonctionnement normal du moteur à combustion interne est repris.
